# EUROPEAN PATENT APPLICATION

(11) **EP 4 310 106 A1**
(43) Date of publication of application: **24.01.2024**
(21) Application number: 22771133.0
(22) Date of filing: 03.03.2022
(51) Int. Cl.: C08F 2/50

(54) **CURABLE COMPOSITION AND CURED PRODUCT THEREOF**

(30) Priority: 19.03.2021 JP 2021046294
(71) Applicant: Taiyo Ink Mfg. Co., Ltd., Hiki-gun, Saitama 355-0215 (JP)
(72) Inventor: YOKOYAMA Yutaka, Hiki-gun, Saitama 355-0215 (JP); YONEDA Kazuyoshi, Hiki-gun, Saitama 355-0215 (JP)
(74) Representative: Hoffmann Eitle
(86) International application number: PCT/JP2022/009182
(87) International publication number: WO 2022/196379

(57) **Abstract**

[Objective] To provide a curable composition that is useful as, for example, a solder resist for printed wiring boards, is higher in flame retardancy, coatability, resolution, storage stability and low warpage and is also suitable for an inkjet printing method, and a cured product thereof.

[Solution] A curable composition containing (A) a compound having a (meth)acryloyl group, (B) a heat-curable component, (C) a photopolymerization initiator, (D) a crystalline flame retardant and (E) a wetting and dispersing additive, in which the content of the wetting and dispersing additive (E) is 1% by weight to 9% by weight with respect to the content of the crystalline flame retardant (D), a cured product obtained from the curable composition and an electronic component having the cured product.

## Description

### Technical Field

The present invention relates to a curable composition and a cured product thereof and particularly to a curable composition suitable for the inkjet printing method and a cured product thereof.

### Background Art

In the manufacturing of a printed wiring board, a solder resist is used to protect a conductor circuit on a substrate from attachment of a solder. As a method for forming this solder resist, conventionally, a photographic development method and a screen printing method have been adopted. In recent years, aside from these photographic development method and screen printing method, an inkjet printing method capable of directly drawing a predetermined print pattern from digital data has been adopted.

Incidentally, the printed wiring board is mounted in an electronic device and thus needs to have flame retardancy, which makes the solder resist that is formed on such a printed wiring board also need to have flame retardancy necessarily.

Regarding this point, for example, Patent Document 1 proposes a technique relating to an inkjet ink containing a phosphorus-based flame retardant, an acid-modified epoxy (meth)acrylate, an epoxy compound having a specific structure and a photopolymerization initiator, a cured film of the ink and an electronic circuit board having the cured film (Patent Document 1).

### Prior Art Document

### Patent Document

Patent Document 1: JP-A-2011-021079

### Summary of Invention

### Problems to be solved by the Invention

Incidentally, recently, the thickness reduction of a printed wiring board has been underway, and, accordingly, a solder resist that is used for the printed wiring board needs to have higher-level flame retardancy.

Therefore, in order to improve the flame retardancy, it is considered to blend a larger amount of a flame retardant into the solder resist. However, in this case, there is a problem in that, conversely, the physical property, such as coatability or resolution, of a composition that forms the solder resist is impaired.

On the other hand, it is also considered to suppress the blending amount of the flame retardant at a low level using a flame retardant having excellent flame-retarding performance. However, in this case, there is a concern that the physical property, such as storage stability or low warpage, of the solder resist may be impaired.

Therefore, an objective of the present invention is to provide a curable composition that is useful as, for example, a solder resist for printed wiring boards, is higher in flame retardancy, coatability, resolution, storage stability and low warpage and is also suitable for an inkjet printing method, and a cured product thereof.

### Means for Solving the Problems

As a result of intensive studies, the present inventors have found that the above-described problem can be solved by a curable composition in which a crystalline flame retardant and a wetting and dispersing additive are jointly used and the blending proportion of the wetting and dispersing additive with respect to the flame retardant is set within a specific numerical range and completed the present invention.

More specifically, the problem of the present invention can be solved by a curable composition containing
(A) a compound having a (meth)acryloyl group,
(B) a heat-curable component,
(C) a photopolymerization initiator,
(D) a crystalline flame retardant, and
(E) a wetting and dispersing additive,
in which a content of the wetting and dispersing additive (E) is 1% by weight to 9% by weight with respect to a content of the crystalline flame retardant (D).

Particularly, a preferable aspect of the present invention relates to the curable composition, in which the wetting and dispersing additive (E) is a phosphorus-based wetting and dispersing additive.

In addition, another preferable aspect of the present invention relates to the curable composition, in which the crystalline flame retardant (D) contains a phosphorus-based crystalline flame retardant, and a content proportion of phosphorus derived from the phosphorus-based crystalline flame retardant in the curable composition is 1% by weight to 10% by weight.

In addition, still another preferable aspect of the present invention also relates to the curable composition, in which the curable composition has a viscosity of 50 mPa·s or lower at 50°C.

In addition, another aspect of the present invention also relates to a cured product obtained from the curable composition or an electronic component having the cured product.

### Effects of Invention

According to the present invention, it is possible to provide a curable composition having favorable coatability, a favorable resolution and an appropriate viscosity and also having favorable storage stability and a cured product thereof having favorable flame retardancy and favorable low warpage after the curing of the curable composition.

Therefore, the cured product of the present invention is suitable for, for example, solder resists, and the curable composition is also suitable for the inkjet printing method.

### Mode for carrying out the Invention

A curable composition of the present invention mainly contains, as coated film-forming components after curing, a compound having a (meth)acryloyl group (A) and a heat-curable component (B) and contains a photopolymerization initiator (C) to initiate curing. In addition, one of the characteristics of the curable composition of the present invention is to further contain a wetting and dispersing additive (E) in a specific blending rate with respect to a crystalline flame retardant (D). More specifically, in a case where the content (for example, parts by weight) of the wetting and dispersing additive (E) in the curable composition is in a range of 1% by weight or more and 9% by weight or less with respect to the content (parts by weight) of the crystalline flame retardant (D) in the curable composition, the curable composition of the present invention is capable of exhibiting the above-described effect.

In addition, in the case of using the curable composition of the present invention in the inkjet printing method, the curable composition preferably has a viscosity of 50 mPa·s or lower at 50°C.

In the present invention, the viscosity is a value measured at 50°C and 100 rpm for 30 seconds with a cone plate-type viscometer (TVE-33H, manufactured by Toki Sangyo Co., Ltd.) in which a 1°34' × R24 cone rotor is used according to Methods for Viscosity Measurement with a cone plate-type viscometer of 10 of JIS Z 8803:2011.

Hereinafter, each configuration component of the curable composition of the present invention will be described.

### [(A) Compound Having (Meth)acryloyl Group]

In the present invention, the compound having a (meth)acryloyl group (A) means a compound having one or more (meth)acryloyl groups in one molecule. The viscosity of the curable composition can be adjusted to a low viscosity (that is, a viscosity of 15 mPa·s or lower at 50°C) by adjusting the content of the compound having a (meth)acryloyl group.

The total content of the compound having a (meth)acryloyl group is preferably 60% by weight to 95% by weight and more preferably 65% by weight to 90% by weight with respect to the total weight (100% by weight) of the curable composition.

Examples of the compound having a (meth)acryloyl group include a compound having a (meth)acryloyl group and having no hydroxyl group and a compound having a (meth)acryloyl group and having a hydroxyl group. The compound having a (meth)acryloyl group and having a hydroxyl group is preferably used in a case where a blocked isocyanate compound is used as the heat-curable component (B).

Examples of the compound having a (meth)acryloyl group and having no hydroxyl group include methyl α-(allyloxymethyl)acrylate, or diacrylates of a diol such as 1,4-butanediol diacrylate, 1,6-hexanediol diacrylate, 1,9-nonanediol diacrylate and 1,10-decanediol diacrylate, diacrylates of glycol such as ethylene glycol diacrylate, diethylene glycol diacrylate, triethylene glycol diacrylate, tetraethylene glycol diacrylate, polyethylene glycol diacrylate, dipropylene glycol diacrylate, tripropylene glycol diacrylate, polypropylene glycol diacrylate, neopentyl glycol diacrylate, diacrylates of a diol obtained by adding at least any one of ethylene oxide and propylene oxide to neopentyl glycol, caprolactone-modified hydroxypivalic acid neopentyl glycol diacrylate, diacrylates having a cyclic structure such as EO adduct diacrylate of bisphenol A (ethoxylated bisphenol A diacrylate), PO adduct diacrylate of bisphenol A, tricyclodecanedimethanol diacrylate, hydrogenated dicyclopentadiene diacrylate, cyclohexyl diacrylate or bifunctional (meth)acrylates of methacrylate monomers corresponding thereto, pentaerythritol triacrylate, trimethylolpropane triacrylate, trimethylolmethane triacrylate, ethylene oxide-modified trimethylolpropane triacrylate, propylene oxide-modified trimethylolpropane triacrylate, epichlorohydrin-modified trimethylolpropane triacrylate, pentaerythritol tetraacrylate, pentaerythritol tetramethacrylate, tetramethylolmethane tetraacrylate, ethylene oxide-modified phosphoric acid triacrylate, epichlorohydrin-modified glycerol triacrylate, dipentaerythritol hexaacrylate, or polyfunctional acrylates represented by silsesquioxane-modified products thereof or polyfunctional (meth)acrylates of a methacrylate monomers, trifunctional methacrylate esters, and ε-caprolactone-modified tris(acryloxyethyl)isocyanurate corresponding thereto. These can be used singly or in combination of two or more. Examples of a commercially available product include A-BPE-4 (ethoxylated bisphenol A diacrylate) manufactured by Shin-Nakamura Chemical Co., Ltd.; AOMA (α-(allyloxymethyl) methyl acrylate) manufactured by Nippon Shokubai Co., Ltd.; and DPGDA (dipropylene glycol diacrylate) manufactured by Daicel-Allnex Ltd.

While also depending on the kinds and contents of other components, the content of the compound having a (meth)acryloyl group and having no hydroxyl group is, roughly, preferably 80% by weight to 100% by weight and more preferably 85% by weight to 100% by weight with respect to the total weight (100% by weight) of the compound having a (meth)acryloyl group (A) in the curable composition. When the content is within such a range, it is possible to obtain a curable composition having a viscosity in a range of 15 mPa·s or lower at 50°C.

The compound having a (meth)acryloyl group and having a hydroxyl group is a component for forming a cured product by curing together with the compound having a (meth)acryloyl group and having no hydroxyl group in a photocuring stage and further reacting with the blocked isocyanate compound as the heat-curable component in a subsequent heat-curing stage. As described above, the compound having a (meth)acryloyl group and having a hydroxyl group reacts with an isocyanate group in the end and thus simply needs to have a structure having a hydroxyl group in the molecule, and the number of hydroxyl groups per molecule also does not particularly matter. However, the number of hydroxyl groups is preferably small enough to suppress the viscosity of the curable composition to an extent that the curable composition can be smoothly ejected from an inkjet nozzle.

Examples of the compound having a (meth)acryloyl group and having a hydroxyl group include compounds having a (meth)acryloyl group, having a hydroxyl group and having a molecular weight of 100 to 600 g/mol, for example, 2-hydroxy-3-acryloyloxypropyl (meth)acrylate, 2-hydroxy-3-phenoxyethyl (meth)acrylate, 1,4-cyclohexanedimethanol mono(meth)acrylate, 2-hydroxyethyl (meth)acrylate, 2-hydroxypropyl (meth)acrylate, 4-hydroxybutyl (meth)acrylate, pentaerythritol tri(meth)acrylate, dipentaerythritol monohydroxy penta(meth)acrylate and 2-hydroxypropyl (meth)acrylate. Compounds having a (meth)acryloyl group and having a hydroxyl group can be used singly or in combination of two or more. Examples of a commercially available product include 4-HBA (4-hydroxybutyl acrylate) manufactured by Mitsubishi Chemical Corporation.

In the case of using the compound having a (meth)acryloyl group and having a hydroxyl group, while also depending on the kinds and contents of other components, the content thereof is, roughly, preferably 1% by weight to 15% by weight and more preferably 2% by weight to 15% by weight with respect to the total weight (100% by weight) of the compound having a (meth)acryloyl group (A) in the curable composition. When the content is within such a range, it is possible to obtain a favorable curing property.

### [(B) Heat-curable Component]

The curable composition of the present invention preferably contains the heat-curable component (B) in order to enhance the toughness or soldering heat resistance of a cured product to be obtained.

Examples of the heat-curable component (B) that can be used in the present invention include a variety of heat-curable components that are normally used in the technical field, and it is possible to use, for example, well-known compounds such as a blocked isocyanate compound, an epoxy compound and an oxetane compound. Among them, in the present invention, particularly, a latent heat-curable component having a functional group in the structure protected by a protective group can be preferably used. When such a latent heat-curable component is used, it is possible to enhance the storage stability by suppressing a unintended reaction in the curable composition caused by a unexpected condition, the inkjet printability at 50°C is also excellent, and the protective group can be easily removed by heating or the like when a reaction is desired. In the present invention, "being latent" means that a substance does not exhibit activity at normal temperature or under a slight heating condition, but is activated by heating at high temperatures of 80°C or higher to exhibit a heat-curable property.

The latent heat-curable component is preferably a blocked isocyanate compound. The blocked isocyanate compound is a compound preferably having a plurality of blocked isocyanate groups in one molecule. The blocked isocyanate group refers to an isocyanate group that has been reacted with a blocking agent and thereby protected and temporarily inactivated, and, when the blocked isocyanate group is heated to a predetermined temperature, the blocking agent is dissociated and an isocyanate group is generated. That is, since the blocked isocyanate compound has a protective group (blocking agent), heating upon need enables the protective group to be detached and the blocked isocyanate compound to function as an isocyanate for the first time, and thus the storage stability is excellent, which makes it easy to handle the blocked isocyanate compound.

As a polyisocyanate compound having a plurality of isocyanate groups, for example, an aromatic polyisocyanate, an aliphatic polyisocyanate or an alicyclic polyisocyanate can be used.

Specific examples of the aromatic polyisocyanate include diphenylmethane diisocyanate (for example, 4,4'-diphenylmethane diisocyanate), hydrogenated diphenylmethane diisocyanate, tolylene diisocyanate (for example, 2,4-tolylene diisocyanate, 2,6-tolylene diisocyanate), hydrogenated tolylene diisocyanate, naphthalene diisocyanate (for example, naphthalene-1,5-diisocyanate), xylylene diisocyanate (for example, o-xylylene diisocyanate, m-xylylene diisocyanate), hydrogenated xylylene diisocyanate, 2,4-tolylene dimer, and tolidine diisocyanate.

Specific examples of the aliphatic polyisocyanate include tetramethylene diisocyanate, hexamethylene diisocyanate, methylene diisocyanate, trimethylhexamethylene diisocyanate, 4,4-methylenebis(cyclohexyl isocyanate), isophorone diisocyanate, and lysine isocyanate.

Specific examples of the alicyclic polyisocyanate include bicyclopentane triisocyanate.

Examples of the polyisocyanate compound include adduct forms, burette forms and isocyanurate forms of the isocyanate compounds exemplified above. The adduct form of the isocyanate compound is, for example, an adduct-type isocyanate compound that is obtained by reacting a variety of the above-described isocyanate compounds and a tri- or higher functional polyvalent alcohol such as glycerin, trimethylolpropane, trimethylolethane, 1,2,6-hexanetriol, 1,2,4-butanetriol, erythritol, sorbitol, pentaerythritol or dipentaerythritol. The burette form of the isocyanate compound is, for example, a burettetype isocyanate compound that is obtained by reacting a variety of the above-described isocyanate compounds and water. The isocyanurate form of the isocyanate compound is, for example, an isocyanurate-type isocyanate compound that is obtained by turning a variety of the above-described isocyanate compounds into isocyanurates.

Examples of the adduct-type isocyanate compound include isocyanate compounds having a structure represented by the following formula that are obtained by reacting hexamethylene diisocyanate and trimethylolpropane.

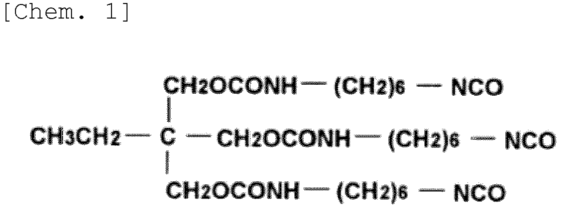

Examples of an isocyanate blocking agent include phenolic blocking agents such as phenol, cresol, xylenol, chlorophenol and ethylphenol; lactam blocking agents such as ε-caprolactam, δ-valerolactam, γ-butyrolactam and β-propiolactam; active methylene-based blocking agents such as ethyl acetoacetate and acetylacetone; alcoholic blocking agents such as methanol, ethanol, propanol, butanol, amyl alcohol, ethylene glycol monomethyl ether, ethylene glycol monoethyl ether, ethylene glycol monobutyl ether, diethylene glycol monomethyl ether, propylene glycol monomethyl ether, benzyl ether, methyl glycolate, butyl glycolate, diacetone alcohol, methyl lactate and ethyl lactate; oxime blocking agents such as formaldehyde oxime, acetaldoxime, acetoxime, methyl ethyl ketoxime, diacetyl monoxime and cyclohexane oxime; mercaptan blocking agents such as butyl mercaptan, hexyl mercaptan, t-butyl mercaptan, thiophenol, methylthiophenol and ethylthiophenol; acid amide blocking agents such as acetic acid amide and benzamide; imide blocking agents such as succinimide and maleic imide; amine blocking agents such as xylidine, aniline, butylamine and dibutylamine; imidazole blocking agents such as imidazole and 2-ethylimidazole; imine blocking agents such as methyleneimine and propyleneimine; and pyrazole blocking agents such as dimethylpyrazole.

The blocked isocyanate compound may be a commercially available product, and examples thereof include DURANATE TPA-B80E, 17B-60PX and E402-B80T (all manufactured by Asahi Kasei Corporation), Trixene BI7982: blocked isocyanate (hexamethylene isocyanate (HDM) trimer, blocking agent: dimethylpyrazole (DMP), manufactured by Baxenden Chemicals Limited).

The latent heat-curable component may be a reaction product obtained by reacting an amine compound such as imidazole or dicyandiamide and a hydroxyl group-containing compound, a cyclic ether group-containing compound, a carboxyl group-containing compound.

The content of the heat-curable component (B) is preferably 1 part by weight to 20 parts by weight and more preferably 5 parts by weight to 15 parts by weight with respect to 100 parts by weight of the curable composition of the present invention. When the content is within a numerical range of 1 part by weight to 20 parts by weight, the toughness and soldering heat resistance of an obtained cured product improve.

### [(C) Photopolymerization Initiator]

The photopolymerization initiator (C) needs to be capable of polymerizing the compound having a (meth)acryloyl group (A) by irradiation with energy rays such as ultraviolet rays, electron beams, or actinic radiation.

Examples of such a photopolymerization initiator (C) include benzoin and benzoin alkyl ethers such as benzoin, benzoin methyl ether, benzoin ethyl ether and benzoin isopropyl ether; acetophenones such as acetophenone, 2,2-dimethoxy-2-phenylacetophenone, 2,2-diethoxy-2-phenylacetophenone and 1,1-dichloroacetophenone; aminoacetophenones such as 2-methyl-1-[4-(methylthio)phenyl]-2-morpholinopropan-1-one, 2-benzyl-2-dimethylamino-1-(4-morpholinophenyl)-butane-1-one and N,N-dimethylaminoacetophenone; anthraquinones such as 2-methylanthraquinone, 2-ethylanthraquinone, 2-t-butylanthraquinone and 1-chloroanthraquinone; thioxanthones such as 2,4-dimethylthioxanthone, 2,4-diethylthioxanthone, 2-chlorothioxanthone and 2,4-diisopropylthioxanthone; ketals such as acetophenone dimethyl ketal and benzyl dimethyl ketal; 2,4,5-triarylimidazole dimer; riboflavin tetrabutyrate; thiol compounds such as 2-mercaptobenzimidazole, 2-mercaptobenzoxazole and 2-mercaptobenzothiazole; organic halogen compounds such as 2,4,6-tris-s-triazine, 2,2,2-tribromoethanol and tribromomethyl phenyl sulfone; benzophenones or xanthones such as benzophenone and 4,4'-bisdiethylaminobenzophenone; acylphosphines such as 2,4,6-trimethylbenzoyldiphenylphosphine oxide, and oxime esters such as 1,2-octanedione, 1-[4-(phenylthio)-,2-(O-benzoyloxime)], ethanone, 1-[9-ethyl-6-(2-methylbenzoyl)-9H-carbazol-3-yl]-, 1-(O-acetyloxime).

In addition, the photopolymerization initiator can be used singly or a plurality of photopolymerization initiators can be mixed and used.

In addition, examples of a commercially available product of the photopolymerization initiator (C) that can be used in the present invention include Omnirad 907, Omnirad 127, Omnirad 379 (all manufactured by IGM Resins).

The content of the photopolymerization initiator (C) is preferably 0.01 parts by weight to 10 parts by weight and more preferably 0.01 parts by weight to 8 parts by weight with respect to 100 parts by weight of the curable composition of the present invention. When the content is within a range of 0.01 to 10 parts by weight, the surface curing property of the cured product becomes favorable.

### [(D) Crystalline Flame Retardant]

The crystalline flame retardant (D) used in the present invention means a flame retardant having crystallinity. "Having crystallinity" in the present invention refers to the fact that, when a curable composition with a specific formulation containing a subject flame retardant is heated at 50°C for one hour to dissolve the flame retardant, filtered using a 1 µm filter and then left to stand at room temperature for four days in a sealed state and the fineness of grind is evaluated using a 0-50 µm grinder gauge according to the method for fineness of grind of JIS K 5600-2-5, grains are visually confirmed. On the contrary, when grains are not confirmed under the same conditions, the subject flame retardant is determined as an amorphous flame retardant and regarded as being different from the crystalline flame retardant (D) in the present invention.

As the curable composition having a specific formulation, a composition having a formulation as described below:
A-TMPT: Trimethylolpropane triacrylate; manufactured by Shin-Nakamura Chemical Co, Ltd.: 10 parts by weight
1,9-NDA (1,9-nonanediol dimethacrylate): manufactured by DKS Co., Ltd.: 14 parts by weight
DPGDA: Dipropylene glycol diacrylate; manufactured by Toyo Chemicals Co., Ltd.: 29.5 parts by weight
IBXA: Isobornyl acrylate; manufactured by Osaka Organic Chemical Industry Ltd.: 20 parts by weight
4HBA: 4-Hydroxybutyl acrylate; manufactured by Kyoeisha Chemical Co., Ltd.: 10 parts by weight BI7982: Trifunctional blocked isocyanate; manufactured by Baxenden Chemicals Limited: 10 parts by weight
Omnirad 379: 2-(Dimethylamino)-2-[(4-methylphenyl)methyl]-1-[4-(4-morpholinyl)phenyl]-1-butanone; manufactured by IGM Resins: 5 parts by weight
Subject flame retardant: 15 parts by weight is used. In addition, the flame retardant in the present invention refers to a component exhibiting an action of improving the flame retardancy of the curable composition and the cured product thereof when blended into the curable composition. Specifically, the flame retardant means a variety of flame retardants as exemplified below, but is not limited thereto.

When a crystalline flame retardant is adopted as the flame retardant, compared with a case where an amorphous flame retardant is used, it is possible to enhance the flame retardancy of the cured product even with a smaller content. However, at the same time, depending on the combination with other components, there are cases where the storage stability of the curable composition, the low warpage of the cured product or the like deteriorates. Therefore, in order to suppress such cases as one of the purposes, in the present invention, the wetting and dispersing additive (E), which will be described below, is jointly used with the crystalline flame retardant (D) in a (weight-based) proportion within a specific range.

Such a crystalline flame retardant (D) as used in the present invention simply needs to have crystallinity as described above and is not particularly limited in terms of chemical structure as long as the effect of the present invention can be exhibited.

The crystalline flame retardant (D) preferably has a phosphorus atom in the structure from the viewpoint of further enhancing the flame retardancy, and, for example, from a phosphazene compound, a phosphate ester amide compound, a condensed phosphate ester or the like, a crystalline compound can be selected.

Specific examples of a suitable crystalline flame retardant (D) include FP-100 (phosphazene compound; manufactured by Fushimi Pharmaceutical Co., Ltd.), SP-703 (phosphate ester amide compound; manufactured by Shikoku Chemicals Corporation), PX200 (condensed phosphate ester; manufactured by Daihachi Chemical Industry Co., Ltd.) and SR-3000 (condensed phosphate ester; manufactured by Daihachi Chemical Industry Co., Ltd.), but it is needless to say that the suitable crystalline flame retardant (D) is not limited thereto.

The above-described crystalline flame retardants (D) may be used singly and, surely, two or more thereof may also be jointly used.

The content of the crystalline flame retardant (D) is preferably 5% by weight to 35% by weight and more preferably 10% by weight to 30% by weight with respect to the total solid content of the curable composition. In a case where the crystalline flame retardant (D) contains a phosphorus-based crystalline flame retardant, the blending amount of the phosphorus-based crystalline flame retardant is preferably an amount at which the content proportion of phosphorus derived from the crystalline flame retardant (D) in the curable composition becomes 1% by weight to 10% by weight. When the blending amount is within the above-described numerical range, favorable flame retardancy can be achieved without impairing other characteristics as the cured product. In a case where the curable composition contains a solvent, the blending amount is preferably an amount at which the content proportion of the phosphorus derived from the crystalline flame retardant (D) becomes 1% by weight to 10% by weight with respect to the solid content of the curable composition.

### [(E) Wetting and Dispersing Additive]

In the present invention, the wetting and dispersing additive (E) is jointly used with the crystalline flame retardant (D). The joint use of the crystalline flame retardant (D) and the wetting and dispersing additive (E) makes it possible to improve the flame retardancy of the cured product while maintaining physical properties such as the storage stability of the curable composition or the low warpage of the cured product. Therefore, as the wetting and dispersing additive (E), a well-known wetting and dispersing additive can be used with no particular limitations as long as such a purpose can be achieved.

Examples thereof include copolymers containing an acid group, pigment affinity block copolymers, phosphate ester compounds, polyether phosphate ester compounds, fatty acid ester compounds, alkylene oxide copolymers, modified polyether polymers, fatty acid derivatives, urethane polymers.

Specific examples thereof include DISPERBYK (registered trademark) series (manufactured by BYK), EFKA (registered trademark) series (manufactured by BASF), SOLSPERSE (registered trademark) series (manufactured by The Lubrizol Corporation), Disparlon series (manufactured by Kusumoto Chemicals, Ltd.), Flowlen series (manufactured by Kyoeisha Chemical Co., Ltd.), but it is needless to say that the wetting and dispersing additive is not limited thereto.

A more suitable wetting and dispersing additive (E) is a phosphorus-based wetting and dispersing additive having a phosphorus atom in the structure. When a phosphorus-based wetting and dispersing additive is contained in the curable composition, there is an advantage in that the flame retardancy of a cured product to be obtained can be further enhanced. Examples of such a phosphorus-based wetting and dispersing additive (E) include BYK-111 and BYK-145 (both manufactured by BYK), but it is needless to say that the phosphorus-based wetting and dispersing additive is not limited thereto.

The above-described wetting and dispersing additives (E) may be used singly and, surely, two or more thereof may also be jointly used.

The wetting and dispersing additive (E) is contained in the curable composition in an amount that is preferably 1% by weight to 9% by weight and more preferably 2% by weight or more and 7% by weight or less with respect to the content of the crystalline flame retardant (D) in the curable composition from the viewpoint of maintaining the favorable coatability by decreasing the viscosity of the curable composition and preventing the deterioration of the storage stability or the low warpage in a case where the above-described crystalline flame retardant has been blended.

### [Other components]

It is needless to say that the curable composition of the present invention may contain other additives that are well known and commonly practical in the field of electronic materials depending on a use or purpose thereof.

Examples of the other additives include an antioxidant, a coupling agent, a polymerization retardant, an ion scavenger, a thermal polymerization inhibitor, a UV absorber, a plasticizer, an antistatic agent, an antiaging agent, an antibacterial/antifungal agent, an antifoaming agent, a leveling agent, a filler, a thickener, an adhesion-imparting agent, a thixotropic agent, a colorant, a photoinitiation aid, a sensitizer, a release agent, a surface treatment agent, a dispersing aid, a surface control agent, a stabilizer, and a phosphor.

The curable composition of the present invention has a viscosity suitable for printing by an inkjet printing method and thus can be ejected by an inkjet printer with no hindrance.

Therefore, it is also possible to use the curable composition of the present invention as ink and to directly draw a pattern on a substrate for a printed wiring board or the like.

A cured product of the present invention can be obtained by irradiating a curable composition layer immediately after being printed with light and photocuring the curable composition layer. The light irradiation is performed by irradiation with active energy rays such as ultraviolet rays, electron beams or actinic radiation and preferably performed by irradiation with ultraviolet rays.

Irradiation with ultraviolet rays in the inkjet printer can be performed by, for example, installing a light source such as a high-pressure mercury lamp, a metal halide lamp or an ultraviolet LED on a side surface of a printer head and moving the printer head or a base material to perform scanning. In this case, it is also possible to perform printing and irradiation with ultraviolet rays almost at the same time.

In addition, the curable composition of the present invention contains the heat-curable component (B) and thus can be heat-cured using well-known heating means, for example, a hot stove, an electric furnace or an infrared induction heating furnace. In this case, the curable composition is preferably heated at 120°C to 170°C for five minutes to 60 minutes.

The cured product obtained from the curable composition of the present invention also has excellent flexibility and is thus also suitable as a solder resist particularly for flexible printed wiring boards.

Examples of a substrate for flexible printed wiring boards include films made of a glass/polyimide, a polyimide, polyethylene terephthalate, a liquid crystal polymer, and polycarbonate.

Furthermore, the present invention also provides an electronic component having the cured product that is obtained by curing the curable composition.

The electronic component in the present invention means a component that is used in electronic circuits and includes not only active components such as a printed wiring board, particularly, a flexible printed wiring board, a transistor, a light-emitting diode and a laser diode but also passive components such as a resistance, a capacitor, an inductor and a connector, and the cured product of the curable composition of the present invention is suitable as, for example, an insulating cured film thereof.

Hereinafter, one aspect of the present invention will be specifically described with examples, which, of course are not intended to limit the scope of the invention according to the claims of the present application.

In addition, unless otherwise described, "parts" and "%" to be mentioned are weight-based.

### Examples

### [Examples 1 to 15 and Comparative Examples 1 to 5]

Individual components were blended in individual blending amounts as shown in Table 1 below, and these were stirred with a dissolver (room temperature, rotation speed: 500 rpm, for five minutes). After that, dispersion was performed for two hours with zirconia beads using a bead mill, thereby obtaining curable compositions of the present invention (Examples 1 to 15) and comparative compositions (Comparative Examples 1 to 5) .

As the bead mill, a conical K-8 (manufactured by Buhler) was used, and kneading was performed under conditions of a rotation speed of 1200 rpm, an ejection amount of 20%, a bead grain diameter of 0.65 mm and a filling rate of 88%.

### [Production Example of Evaluation Substrate]

The curable composition of each of Examples 1 to 15 and Comparative Examples 1 to 5 was applied using an inkjet printing device CPS6151 (manufactured by MicroCraft K.K.). As an array, KM1024i SHE (manufactured by Konica Minolta, Inc., the amount of coating liquid droplets: 6 pL, the number of nozzles: 1024, nozzle temperature: 50°C) was used. Photocuring was performed at 500 mJ/cm² using SGHUV-UN-L042-B (manufactured by MicroCraft K.K., LED light source, wavelength: 365 nm) as a light source. After that, heat curing was performed at 120°C for 60 minutes using a heated-air circulation type drying furnace DF610 (manufactured by Yamato Scientific Co., Ltd.). The thickness of cured film was 15 µm.

### [Test Example 1. Evaluation of Crystallinity of Flame Retardant]

A curable composition corresponding to the formulation of Comparative Example 1 was used as a base, and only the kind of a flame retardant to be blended was changed, thereby producing curable compositions for evaluating crystallinity. In addition, each curable composition for evaluation was heated at 50°C for one hour to completely dissolve the flame retardant and then left stand at room temperature for four days. After that, regarding the compositions for evaluating crystallinity, the fineness of grind was confirmed using a 0-50 µm grinder gauge according to the method for fineness of grind of JIS K 5600-2-5, and flame retardants from which grains were confirmed were determined as crystalline flame retardants.

### [Test Example 2. Flame Retardancy]

The curable composition of each of Examples 1 to 15 and Comparative Examples 1 to 5 was applied onto both surfaces of KAPTON 100H or 50H on which a sulfuric acid treatment had been performed in advance using the inkjet printing device CPS6151 (manufactured by MicroCraft K.K.) as described in the [Production Example of Evaluation Substrate], and a cured film was obtained. In addition, a thin material vertical burning test according to UL 94 standards was performed on the obtained cured film. For evaluation, a burning test was performed based on UL 94 standards. The results are summarized in Table 2 below.
⊚: A result of VTM-0 was obtained (the afterflame time t1 was three seconds or shorter).
○: A result of VTM-0 was obtained (the afterflame time t1 was longer than three seconds).
×: The cured film failed to reach VTM-0 and was burnt.

### [Test Example 3. Coatability]

The curable composition of each of Examples 1 to 15 and Comparative Examples 1 to 5 was applied onto a copper surface of ESPANEX M on which a sulfuric acid treatment had been performed using the inkjet printing device CPS6151 (manufactured by MicroCraft K.K.) as described in the above-described production example of evaluation substrate. The surface of the obtained coated film was visually observed and evaluated with the following standards. The results are summarized in Table 2 below.
⊚: The curable composition was uniformly applied, and the surface was smooth and had luster.
○: The curable composition was uniformly applied, and the surface was smooth but had no luster.
×: The curable composition was applied onto the entire surface, but a streak was generated in a head operation direction or a part of the coated film dropped.

### [Test Example 4. Resolution]

The curable composition of each of Examples 1 to 15 and Comparative Examples 1 to 5 was applied onto a copper surface of ESPANEX M on which a sulfuric acid treatment had been performed using the inkjet printing device CPS6151 (manufactured by MicroCraft K.K.) as described in the above-described production example of evaluation substrate. The opening shape of an obtained cured film was observed using an optical microscope, and the shape and the opening diameter were evaluated. The results are summarized in Table 2 below.

### Observation standards

Observed opening portion φ200 µm
Optical microscope magnification 500 times
Error between opening diameter and designed value = (designed value - opening diameter)

### Evaluation Standards

⊚: There was no drop or bleeding on the wall surface of the opening portion, the opening portion was round, and the error between the opening diameter and the designed value was 20 µm or less.
○: There was no drop or bleeding on the wall surface of the opening portion, the opening portion was round, but the error between the opening diameter and the designed value was more than 20 µm.
×: There was drop or bleeding on the wall surface of the opening portion, and the opening portion was not round.

### [Test Example 5. Viscosity]

The viscosity was measured at 50°C and 100 rpm for 30 seconds with a cone plate-type viscometer (TVE-33H, manufactured by Toki Sangyo Co., Ltd.) in which a 1°34' × R24 cone rotor was used according to Methods for Viscosity Measurement with a cone plate-type viscometer of 10 of JIS Z 8803:2011. In addition, whether or not the curable composition had a viscosity of 15 mPa·s or lower at 50°C was confirmed. The results are summarized in Table 2 below.
15 mPa·s or lower: ○
Higher than 15 mPa·s: ×

### [Test Example 6. Storage Stability]

100 g of the curable composition of each of Examples 1 to 15 and Comparative Examples 1 to 5 was put into a transparent bottle and left to stand for one week in an environment of 15°C, and the state thereof was confirmed. After that, the curable composition was further left to stand for one week in an environment of 10°C, and the state thereof was confirmed. The results are summarized in Table 2 below.

Evaluation is as described below.
⊚: A uniform varnish state was held after the curable composition was left to stand at 10°C.
○: A uniform varnish state was held after the curable composition was left to stand at 15°C; however, precipitation occurred after the curable composition was left to stand at 10°C, and the varnish was not uniform.
×: A precipitate was generated after the curable composition was left to stand at 15°C, and the varnish was not uniform.

### [Test Example 7. Warpage]

The curable composition of each of Examples 1 to 15 and Comparative Examples 1 to 5 was applied onto a single surface of KAPTON 200H on which a sulfuric acid treatment had been performed in advance using the inkjet printing device CPS6151 (manufactured by MicroCraft K.K.) and heat-cured at 120°C for 60 minutes using the heated-air circulation type drying furnace DF610 (manufactured by Yamato Scientific Co., Ltd.), thereby obtaining a cured film. The complete curing of this cured film was confirmed, and a layered product of a polyimide film and the cured film was cut out to 3 cm × 3 cm (length × width), thereby producing a sample (dried film thickness: 15 µm). Each sample was placed still on a horizontal workbench with the cured film surface facing upward, the heights of four ends of the sample rising from the workbench were measured with a ruler, and the average value of the heights of the four ends was obtained. The same test was performed on each sample three times, and the average value of three times of the tests was obtained. It can be said that the warpage was lower as the height was further suppressed in the sample. Evaluation standards are as described below. The results are summarized in Table 2 below.

### Evaluation Standards

⊚: The average value of the total height of the four ends was less than 3 mm.
○: The average value of the total height of the four ends was 3 mm or more and less than 10 mm.
×: The average value of the total height of the four ends was 10 mm or more.

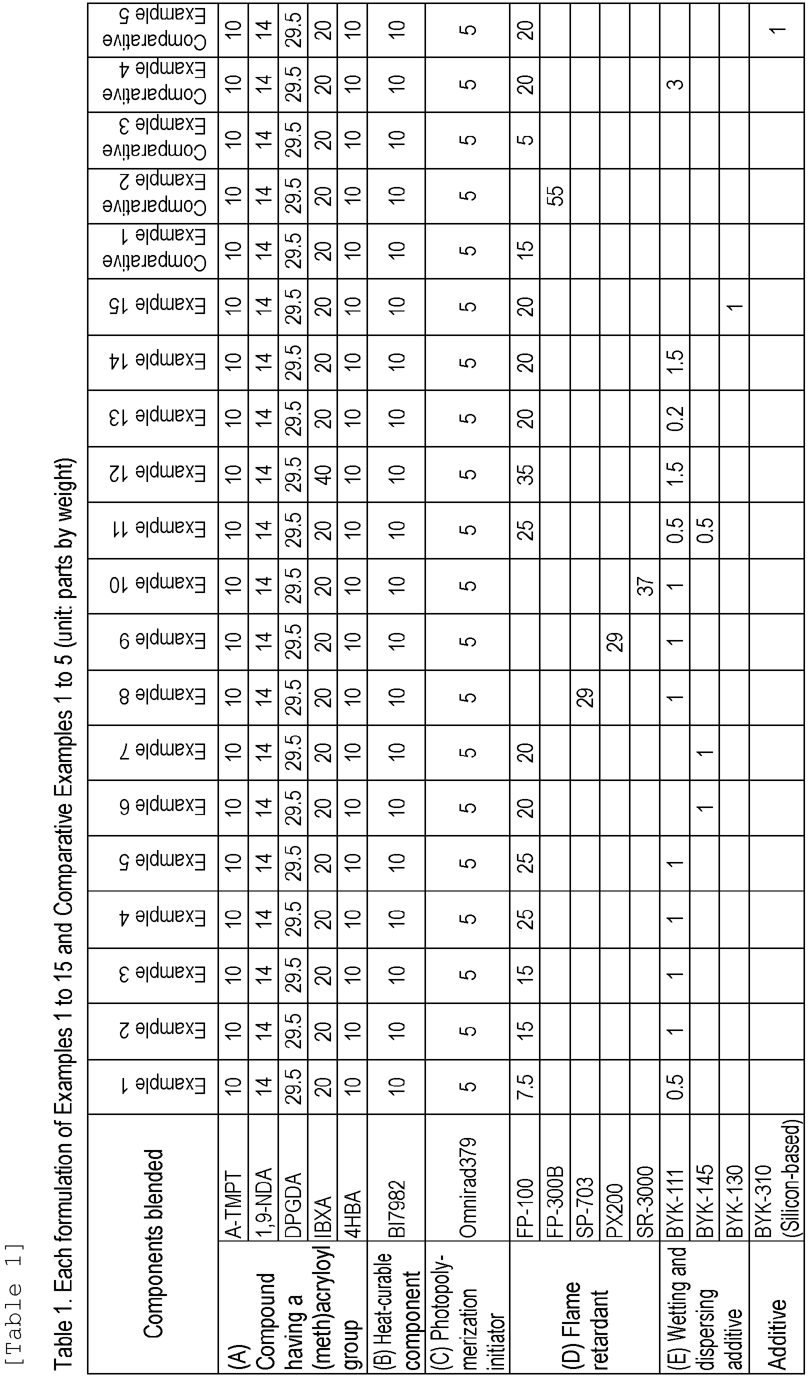

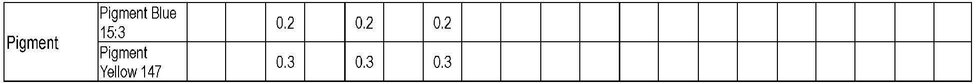

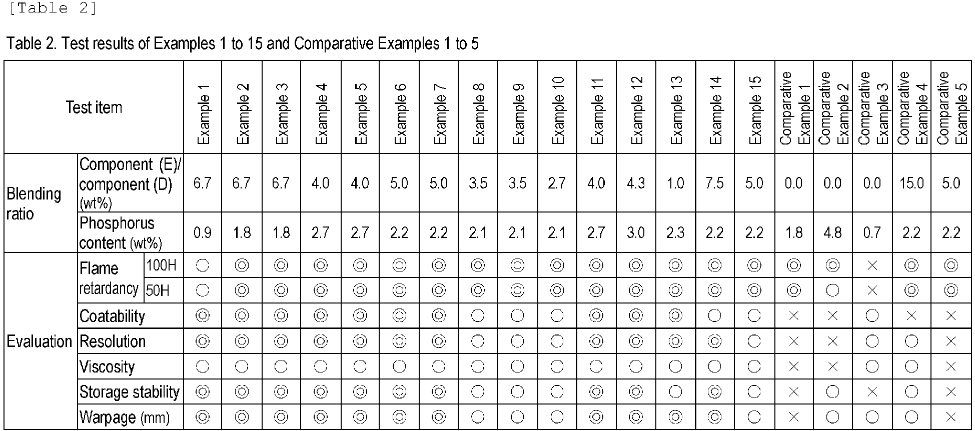

The detail of each component used is as described below.
A-TMPT: Trimethylolpropane triacrylate; manufactured by Shin-Nakamura Chemical Co, Ltd.
1,9-NDA (1,9-nonanediol dimethacrylate): manufactured by DKS Co., Ltd.
DPGDA: Dipropylene glycol diacrylate; manufactured by Toyo Chemicals Co., Ltd.
IBXA: Isobornyl acrylate; manufactured by Osaka Organic Chemical Industry Ltd.
4HBA: 4-Hydroxybutyl acrylate; manufactured by Kyoeisha Chemical Co., Ltd.
BI7982: Trifunctional blocked isocyanate; manufactured by Baxenden Chemicals Limited
Omnirad 379: 2-(Dimethylamino)-2-[(4-methylphenyl)methyl]-1-[4-(4-morpholinyl)phenyl]-1-butanone; manufactured by IGM Resins
FP-100: Phosphazene compound (crystalline, phosphorus content: 13.4%); manufactured by Fushimi Pharmaceutical Co., Ltd.
FP-300B: Phosphazene compound (amorphous, phosphorus content: 12.5%); manufactured by Fushimi Pharmaceutical Co., Ltd.
SP-703: Phosphate ester amide compound (crystalline, phosphorus content: 9.5%; manufactured by Shikoku Chemicals Corporation)
PX200: Condensed phosphate ester (crystalline, phosphorus content: 9.0%); manufactured by Daihachi Chemical Industry Co., Ltd.
SR-3000: Condensed phosphate ester (crystalline, phosphorus content: 7.0%; manufactured by Daihachi Chemical Industry Co., Ltd.)
BYK-111 (phosphorus-based wetting and dispersing additive; DISPERBYK-111 manufactured by BYK)
BYK-145 (phosphorus-based wetting and dispersing additive; DISPERBYK-145 manufactured by BYK)
BYK-130 (polyaminoamide wetting and dispersing additive; DISPERBYK-130 manufactured by BYK)
BYK-310 (silicon-based surface control agent: manufactured by BYK)
Pigment Blue 15:3: Phthalocyanine blue pigment
Pigment Yellow 147: Anthraquinone yellow pigment

## Claims

1. A curable composition comprising:
(A) a compound having a (meth)acryloyl group;
(B) a heat-curable component;
(C) a photopolymerization initiator;
(D) a crystalline flame retardant; and
(E) a wetting and dispersing additive,
wherein a content of the wetting and dispersing additive (E) is 1% by weight to 9% by weight with respect to a content of the crystalline flame retardant (D).

2. The curable composition according to claim 1, wherein the wetting and dispersing additive (E) is a phosphorus-based wetting and dispersing additive.

3. The curable composition according to claim 1 or 2, wherein the crystalline flame retardant (D) contains a phosphorus-based crystalline flame retardant, and a content proportion of phosphorus derived from the phosphorus-based crystalline flame retardant in the curable composition is 1% by weight to 10% by weight.

4. The curable composition according to any one of claims 1 to 3, wherein the curable composition has a viscosity of 50 mPa·s or lower at 50°C.

5. A cured product obtained from the curable composition according to any one of claims 1 to 4.

6. An electronic component, comprising the cured product according to claim 5.
